# EUROPÄISCHE PATENTSCHRIFT

(11) **EP 3 735 571 B1**
(45) Veröffentlichungstag und Bekanntmachung des Hinweises auf die Patenterteilung: **13.04.2022**
(21) Anmeldenummer: 18807291.2
(22) Anmeldetag: 20.11.2018
(51) Int. Cl.: G01G 17/00, A61J 3/07

(54) **EINRICHTUNG ZUR ERMITTLUNG DES GEWICHTS EINER IN EINEM KAPSELHALTER EINES SCHRITTWEISE GEDREHTEN FÖRDERRADS ANGEORDNETEN KAPSEL**
DEVICE FOR DETERMINING THE WEIGHT OF A CAPSULE ARRANGED IN A CAPSULE HOLDER OF AN INCREMENTALLY ROTATED CONVEYOR WHEEL
DISPOSITIF DE DÉTERMINATION DU POIDS D'UNE CAPSULE DISPOSÉE DANS UN PORTE-CAPSULE D'UNE ROUE DE TRANSPORT TOURNÉE PAS À PAS

(30) Priorität: 04.01.2018 DE 102018200068
(43) Veröffentlichungstag der Anmeldung: 11.11.2020
(73) Patentinhaber: Syntegon Technology GmbH, 71332 Waiblingen (DE)
(72) Erfinder: WICK, Wolfgang, 71686 Remseck (DE); RUNFT, Werner, 71364 Winnenden (DE)
(74) Vertreter: DREISS Patentanwälte PartG mbB
(86) Internationale Anmeldenummer: PCT/EP2018/081908
(87) Internationale Veröffentlichungsnummer: WO 2019/134770

(56) Entgegenhaltungen:
- EP-B1- 1 582 193
- WO-A1-2009/040634
- DE-A1-102005 057 393
- GB-A- 2 269 354
- JP-A- S6 264 702

## Beschreibung

### Stand der Technik

Die Erfindung betrifft eine Einrichtung zur Ermittlung des Gewichts einer in einem Kapselhalter eines schrittweise gedrehten Förderrads angeordneten Kapsel nach dem Oberbegriff des Anspruchs 1. Weiterhin betrifft die Erfindung eine Vorrichtung zum Herstellen von mit einem Füllgut gefüllten Kapseln, die wenigstens eine erfindungsgemäße Einrichtung aufweist.

Aus der EP 2 389 919 B1 der Anmelderin ist eine gattungsgemäße Einrichtung bekannt. Die bekannte Einrichtung ist am Umfang eines schrittweise gedrehten Förderrads angeordnet und dient dazu, ein Tara- bzw. Nettogewicht sowie ein Bruttogewicht von Kapseln zu ermitteln. Hierzu sind im Bereich des Förderrads zwei, örtlich voneinander getrennte gattungsgemäße Einrichtungen vorgesehen, die jeweils einen Kapselaufnehmer aufweisen, der dazu ausgebildet ist, mehrere Kapseln aus dem Kapselhalter des Förderrads aufzunehmen, wobei die Anordnung der Aufnahmen in dem Kapselaufnehmer der Anordnung von Aufnahmen für die Kapseln in dem Kapselhalter entspricht.

Die gattungsgemäße Einrichtung überführt den Kapselaufnehmer mit den darin angeordneten Kapseln zunächst aus einer Übergabeposition, in der die Kapseln aus den Aufnahmen des Kapselhalters am Förderrad in die Aufnahmen des Kapselaufnehmers überführt werden, in eine Position, in der die Aufnahmen des Kapselaufnehmers oberhalb von Wiegeaufnahmen einer Wiegezelle angeordnet sind. Daraufhin werden aus dem Kapselaufnehmer jeweils einzelne Kapseln in Wiegeaufnahmen der Wiegezelle überführt, wobei die Wiegezelle anhand der unterschiedlich großen Gewichte von aufeinanderfolgenden Messvorgängen auf das Gewicht der jeweiligen Kapsel schließen kann. Nach dem Wiegen der Kapseln werden diese wiederum aus den Wiegeaufnahmen der Wiegezelle zunächst in die Aufnahmen des Kapselaufnehmers überführt, welcher daraufhin in Überdeckung mit entsprechenden (leeren) Aufnahmen eines Kapselhalters an dem Förderrad gebracht werden, um die Kapseln wieder in die Aufnahmen des Kapselhalters am Förderrad einzuschleusen.

Der soweit beschriebene Wiegevorgang kann sowohl für leere Kapseln, als auch für befüllte Kapseln mittels der beiden angesprochenen Einrichtungen stattfinden.

Als nachteilhaft hat sich in der Praxis herausgestellt, dass Wiegezellen, die mehrere Wiegeaufnahmen aufweisen, insbesondere beim Wiegen von kleinen Massen bzw. geringen Füllmengen, gemeint sind hierbei insbesondere

Füllgewichte von weniger als 100mg, systembedingt relativ hohe Ungenauigkeiten aufweisen. Die bekannte Einrichtung ist daher effektiv vorzugsweise zum schnellen Wiegen bei relativ hohen Füllgewichten geeignet.

Aus der EP 1 582 193 B1 ist daher eine Einrichtung bekannt, die eine Wiegezelle mit einer einzigen Wiegeaufnahme aufweist. Zum Überführen einer Kapsel aus einem kontinuierlich, d.h. nicht schrittweise gedrehten Förderrad sind zwei, um jeweils eine Achse drehbar angeordnete Überführeinrichtungen vorgesehen, wobei die erste Überführeinrichtung eine Kapsel von einer am Außenumfang des Förderrads angeordneten, halbkreisförmigen Aufnahme entnimmt und der Wiegezelle bzw. der Wiegeaufnahme zuführt, während die andere Einrichtung eine bereits gewogene Kapsel von der Wiegeaufnahme in eine Aufnahme des Förderrad zurückfördert. Die bekannte Einrichtung erlaubt es lediglich, gleichzeitig jeweils eine Kapsel aus dem Förderrad zu entnehmen bzw. in dieses zurückzufördern.

Zuletzt ist es aus der GB 2 269 354 A bekannt, bei einem schrittweise gedrehten Förderrad ebenfalls jeweils eine, am Umfang des Förderrads in einer Aufnahme angeordnete Kapsel zu entnehmen und nach dem Wiegen in eine leere Aufnahme des Förderrads zurückzufördern. Auch diese Einrichtung weist eine Wiegezelle mit lediglich einer einzigen Wiegeaufnahme auf. Die Transfereinrichtung von dem Förderrad zu der Wiegezelle und zurück ist konstruktiv jedoch komplex aufgebaut und erfordert eine zusätzliche Übergabe bzw. Übernahme der Kapseln von im Bereich des Förderrads angeordneten schwenkbaren Armen in linear ausgebildete Fördereinrichtungen, die die jeweilige Kapsel der Wiegeaufnahme zuführen.

Das Dokument DE 10 2005 057393 A1 offenbart eine Einrichtung zur Ermittlung eines Gewichts gemäß dem Stand der Technik.

### Offenbarung der Erfindung

Die erfindungsgemäße Einrichtung zur Ermittlung des Gewichts einer in einem Kapselhalter eines schrittweise gedrehten Förderrads angeordneten Kapsel mit den Merkmalen des Anspruchs 1 hat den Vorteil, dass sie bei relativ geringem konstruktiven Aufwand insbesondere bei relativ geringen zu wiegenden Gewichten von Kapseln eine verbesserte Wiegegenauigkeit aufweist. Insbesondere bildet die erfindungsgemäße Einrichtung die aus der EP 2 389 919 B1 bekannte gattungsgemäße Einrichtung insofern weiter, als dass diese mit relativ geringem Aufwand zum hochgenauen Wiegen einzelner Kapseln umgerüstet werden kann.

Erfindungsgemäß ist es hierzu vorgesehen, dass jede Aufnahme in dem Kapselaufnehmer mit der zu wiegenden Kapsel und die (einzige) Wiegeaufnahme in der Wiegezelle in Überdeckung zueinander positionierbar sind. Mit anderen Worten gesagt bedeutet dies, dass durch die individuell zwischen der jeweiligen Aufnahme in den Kapselaufnehmer und der Wiegeaufnahme auszubildenden Übergabe- bzw. Übernahmeposition es ermöglicht wird, die jeweilige Kapsel stets genau an der gleichen Position, d.h. in der Wiegeaufnahme der Wiegezelle abzulegen, unabhängig von der Position der Aufnahme in dem Kapselaufnehmer. Dadurch wird der Einsatz der eine einzige Wiegeaufnahme aufweisenden Wiegezelle ermöglicht, die mit Blick auf geringe zu wiegende Massen der Kapsel eine besonders hohe Genauigkeit aufweist.

Vorteilhafte Weiterbildungen der erfindungsgemäßen Einrichtung zur Ermittlung des Gewichts einer in einem Kapselhalter eines schrittweise gedrehten Förderrads angeordneten Kapsel sind in den Unteransprüchen aufgeführt.

Zur individuellen Positionierung der jeweiligen Aufnahme in dem Kapselaufnehmer zu der (einzigen) Wiegeaufnahme in der Wiegezelle gibt es grundsätzlich unterschiedliche Möglichkeiten: In einer ersten konstruktiven Ausgestaltung der Einrichtung ist es vorgesehen, dass sowohl der Kapselaufnehmer als auch die Wiegeaufnahme der Wiegezelle um jeweils eine Achse schwenkbar gelagert angeordnet sind, wobei die beiden Achsen parallel zueinander und vorzugsweise senkrecht zur horizontalen Förderebene des Förderrads angeordnet sind, und wobei die Bewegungsbahn der Aufnahmen in dem Kapselaufnehmer bei einer Drehung des Kapselaufnehmers um die eine Achse und die Bewegungsbahn der Wiegeaufnahme der Wiegezelle um die andere Achse in einem Übergabe- und Übernahmeort für eine Kapsel einander überdecken. Eine derartige Ausgestaltung ist insofern konstruktiv besonders einfach realisierbar, als dass sowohl der Kapselaufnehmer als auch die Wiegezelle bzw. die Wiegeaufnahme der Wiegezelle jeweils lediglich um eine einzige Achse drehbar angeordnet werden müssen.

Eine konstruktiv alternative Ausgestaltung der erfindungsgemäßen Einrichtung sieht vor, dass die Wiegeaufnahme der Wiegezelle ortsfest angeordnet ist, und dass der Kapselaufnehmer um eine vorzugsweise senkrecht zur horizontalen Förderebene des Förderrads angeordneten Achse schwenkbar gelagert und zusätzlich linear beweglich angeordnet ist. Eine derartige konstruktive Ausgestaltung hat den Vorteil, dass die Wiegezelle besonders einfach ausgebildet sein kann, da diese nicht bewegt werden muss, um ihre Wiegeaufnahme in Überdeckung mit der entsprechenden Aufnahme in dem Kapselaufnehmer zu positionieren. Insbesondere ermöglicht es eine derartige Einrichtung, aus dem Stand der Technik an sich bekannte bzw. verfügbare Wiegezellen mit einer einzigen Wiegeaufnahme unverändert verwenden zu können.

In Weiterbildung des zuletzt gemachten Vorschlags ist es vorgesehen, dass die Linearbewegung des Kapselaufnehmers radial zu dessen Drehachse ausgerichtet ist.

In wiederum alternativer konstruktiver Ausgestaltung des allgemeinen Erfindungsgedankens ist es vorgesehen, dass die Wiegeaufnahme der Wiegezelle ortsfest angeordnet ist, und dass der Kapselaufnehmer in zwei, senkrecht zueinander angeordneten Achsen, die vorzugsweise parallel zur horizontalen Förderebene des Förderrads verlaufen, linear beweglich angeordnet ist. Eine derartige Ausgestaltung des Kapselaufnehmers benötigt somit keine drehbare Anordnung des Kapselaufnehmers sondern ermöglicht es, diesen an beliebigen Orten in der horizontalen Ebene zu positionieren, insbesondere in Überdeckung mit der Wiegeaufnahme der Wiegezelle sowie dem Kapselhalter am Förderrad.

Zuletzt ist in einer wiederum alternativen konstruktiven Ausgestaltung des erfindungsgemäßen Grundgedankens vorgesehen, dass der Kapselaufnehmer um eine Achse schwenkbar angeordnet ist, und dass die Wiegeaufnahme der Wiegezelle in zwei, senkrecht zueinander angeordneten Achsen linear beweglich angeordnet ist, wobei die Achse des Kapselaufnehmers senkrecht zur horizontalen Förderebene des Förderrads angeordnet ist und die beiden Achsen der Wiegeaufnahme parallel zur Förderebene des Förderrads verlaufen. Eine derartige Ausgestaltung ermöglicht es, den Kapselaufnehmer durch eine Drehung um seine Achse in den Bewegungsbereich der Wiegeaufnahme der Wiegezelle zu positionieren, welche aufgrund ihrer horizontalen Bewegbarkeit die Wiegeaufnahme in Überdeckung mit der entsprechenden Aufnahme in den Kapselaufnehmer bringen kann.

Bei allen soweit beschriebenen konstruktiven Ausgestaltungen der erfindungsgemäßen Einrichtung findet zur Übernahme der Kapsel aus den Aufnahmen des Kapselhalters in die Aufnahmen des Kapselaufnehmers sowie von der Wiegeaufnahme der Wiegezelle in die Aufnahmen des Kapselaufnehmers bevorzugt eine Unterdruckeinrichtung Verwendung, derart, dass die Aufnahmen in dem Kapselaufnehmer mit einer Unterdruckeinrichtung gekoppelt sind, wobei jede Aufnahme individuell ansteuerbar ist.

Weiterhin kann es zur besseren bzw. einfacheren Übergabe der Kapseln, insbesondere im Zusammenhang mit der angesprochenen Unterdruckeinrichtung vorgesehen sein, dass der Kapselaufnehmer zusätzlich senkrecht zur Förderebene des Förderrads beweglich angeordnet ist.

Weiterhin umfasst die Erfindung eine Vorrichtung zum Herstellen von mit einem Füllgut gefüllten Kapseln mit wenigstens einer Einrichtung, die auf die erfindungsgemäße Art und Weise ausgestaltet ist. Insbesondere handelt es sich bei den Kapseln um mit einem Pharmazeutikum gefüllten Hartgelatinekapseln. Bevorzugt ist dabei eine Vorrichtung, bei der zur Verringerung des vorrichtungstechnischen Aufwands eine einzige erfindungsgemäße Einrichtung vorgesehen ist, die sowohl das Netto- bzw. Tara-Gewicht der Kapseln, als auch das Brutto-Gewicht (mit dem Füllgut) erfasst.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Vorrichtung zum Herstellen von mit einem Pharmazeutikum gefüllten Kapseln in einer vereinfachten Darstellung,
- Fig. 2: eine Einrichtung zum Überführen von Kapseln aus einem Kapselhalter der Vorrichtung gemäß Fig. 1 in einen Kapselaufnehmer in einem Längsschnitt,
- Fig. 3 und Fig. 4: die Vorrichtung gemäß Fig. 1 im Bereich einer Wiegeeinrichtung während unterschiedlicher Stellungen des Kapselaufnehmers in perspektivischer Darstellung und
- Fig. 5 bis Fig. 7: jeweils in perspektivischer Darstellung, gegenüber den Fig. 3 und 4 modifizierte Anordnungen zur Illustration der unterschiedlichen Bewegungsmöglichkeiten eines Kapselaufnehmers.

Gleiche Elemente bzw. Elemente mit gleicher Funktion sind in den Figuren mit den gleichen Bezugsziffern versehen.

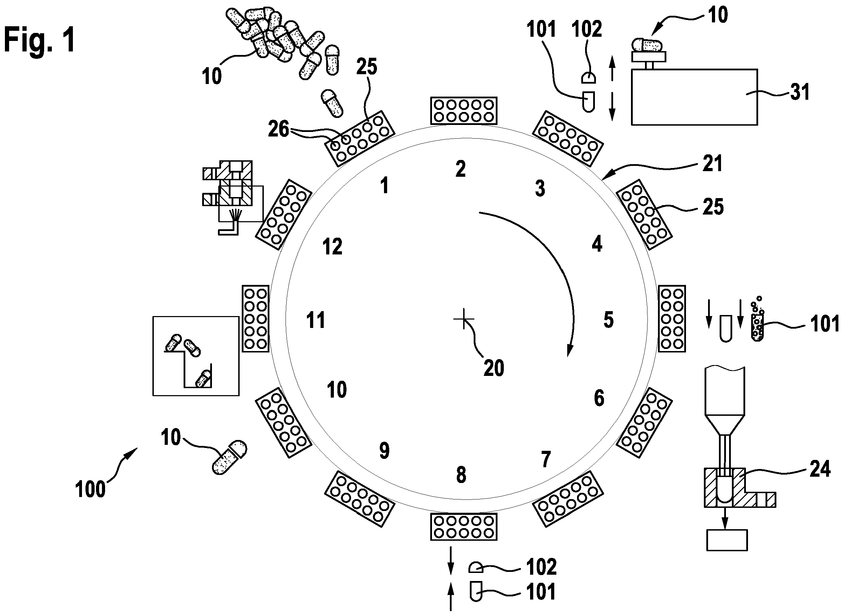

In der Fig. 1 ist stark vereinfacht eine Vorrichtung 100 zum Füllen und Verschließen von aus einem Kapselunterteil 101 und einer aufgesteckten Kappe 102 bestehenden (Hartgelatine-) Kapseln 10 dargestellt. Die Kapseln 10 werden mittels der Vorrichtung 100 insbesondere mittels eines rieselfähigen Pharmazeutika als Füllgut befüllt, wobei bevorzugt und nicht einschränkend relativ geringe Füllgutmengen im Bereich von 200mg oder weniger je Kapsel 10 als Füllmenge vorgesehen sind.

Die Vorrichtung 100 weist ein zwölfteiliges, schrittweise um eine vertikale Achse 20 gedrehtes Förderrad 21 auf, wobei die horizontale Förderebene des Förderrads 21 parallel zur Zeichenebene der Fig. 1 bzw. senkrecht zur Achse 20 verläuft. Das Förderrad 21 weist Stationen 1 bis 12 an der Umlaufstrecke des Förderrads 21 auf, an denen die einzelnen Behandlungseinrichtungen angeordnet sind. Bei der Station 1 werden die zu füllenden, leeren Kapseln 10 ungeordnet aufgegeben sowie ausgerichtet und geordnet in einen als Formatteil austauschbar am Förderrad 21 ausgebildeten Kapselhalter 25 zugeführt. Daraufhin werden die noch verschlossenen Kapseln 10 aus dem Kapselhalter 25 entnommen und von einer Wiegeeinrichtung 31 gewogen. Anschließend werden die gewogenen Kapseln 10 in einen leeren Kapselhalter 25 wieder zurückgelegt und die Kappen 102 von den Kapselunterteilen 101 getrennt. Bei Station 5 wird Füllgut in die Kapselunterteile 101 eingeführt. Bei Station 6 überprüft ein Gewichtskontrollsystem das in die Kapselunterteile 101 eingebrachte Füllgut. Auf Station 8 werden die Kapseln 10 wieder verschlossen. Auf Station 10 werden gegebenenfalls falsch befüllte Kapseln 10 entnommen und zuletzt auf der Station 11 die als korrekt identifizierten Kapseln 10 aus dem Förderrad 21 ausgeschleust bzw. ausgeworfen.

Die Erfindung beschreibt das Handling der Kapseln 10 aus einem Kapselhalter 25 in den Bereich der Wiegeeinrichtung 31 sowie das Rückfördern gewogener Kapseln 10 aus der Wiegeeinrichtung 31 in einen leeren Kapselhalter 25. Hierzu wird zusätzlich erläutert, dass bei einem ersten Durchlauf bzw. bei einer ersten Drehung des Förderrads 21 das Netto- bzw. Tara-Gewicht der Kapseln 10 ermittelt wird. Bei einem ggf. stattfindenden zweiten Durchlauf bzw. einer weiteren Drehung des Förderrads 21 können vorher nicht aus dem Förderrad 21 entnommene Kapseln 10 nochmals gewogen werden, um das Brutto-Gewicht der Kapseln 10 (samt dem Füllgut) zu ermitteln. Dabei kann es vorgesehen sein, dass das Förderrad 21 unmittelbar zur Wiegestation 31 gedreht wird, d.h. dass das Förderrad 21 ggf. vorhandene andere (Zwischen-) Stationen 1 bis 12 überspringt.

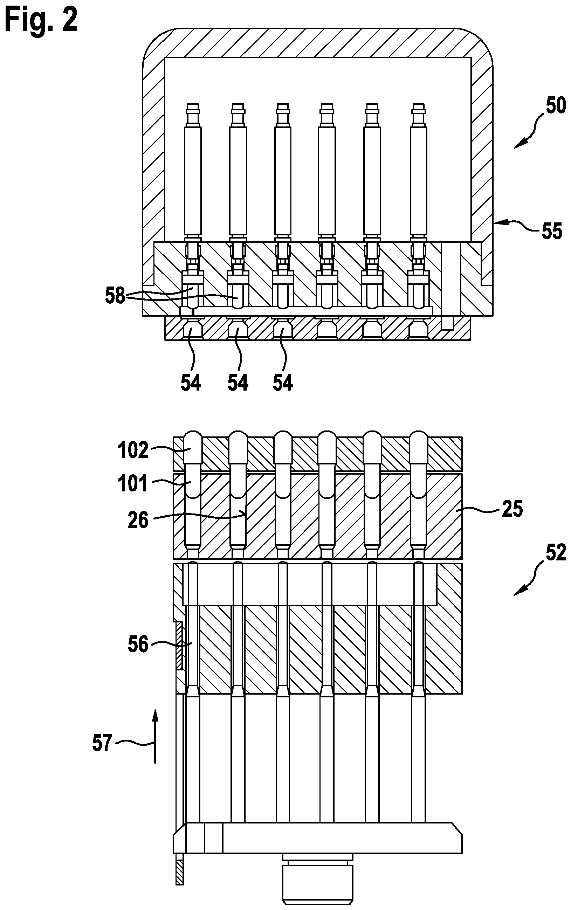

Die Vorrichtung 100 weist eine erfindungsgemäße Einrichtung 50 auf, die eine Überführeinrichtung 52 zum Überführen der Kapseln 10 aus Aufnahmen 26 des Kapselhalters 25 in Aufnahmen 54 eines Kapselaufnehmers 55 umfasst. Beispielhaft weist die Überführeinrichtung 52 hierzu Ausschubstifte 56 im Bereich unterhalb des Förderrads 21 bzw. eines Kapselhalters 25 auf, die aus der in der Fig. 2 dargestellten Stellung in Richtung des Pfeils 57 verstellbar sind, um die Kapseln 10 aus den Aufnahmen 26 in die fluchtend oberhalb der Aufnahmen 26 angeordneten Aufnahmen 54 des Kapselaufnehmers 55 zu überführen. Die Aufnahmen 54 sind wiederum auf der den Kapseln 10 zugewandten Seite der Form der Kapseln 10 formschlüssig angepasst, d.h. in etwa halbkugelförmig ausgebildet, wobei der Grund der Aufnahmen 54 über im Einzelnen nicht dargestellte Sauganschlüsse 58 mit einer nicht dargestellten Unterdruck- bzw. Vakuumquelle verbunden sind, damit die Kapseln 10 durch Ansaugen in den Aufnahmen 54 des Kapselaufnehmers 55 gehalten sind.

Ergänzend wird erwähnt, dass im dargestellten Ausführungsbeispiel sowohl der Kapselhalter 25 als auch der Kapselaufnehmer 55 jeweils zwei Reihen mit in gleichen Abständen fünf zueinander angeordneten Aufnahmen 26 bzw. 54 aufweist. Sowohl der Kapselhalter 25 als auch der Kapselaufnehmer 55 sind jedoch als Formatteile austauschbar an der Vorrichtung 100 bzw. der Einrichtung 50 angeordnet, um diese unterschiedlichen Anforderungen anpassen zu können.

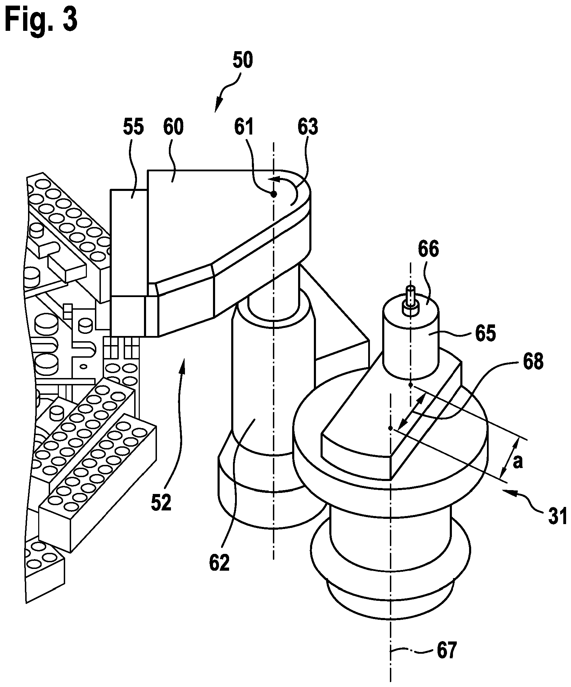

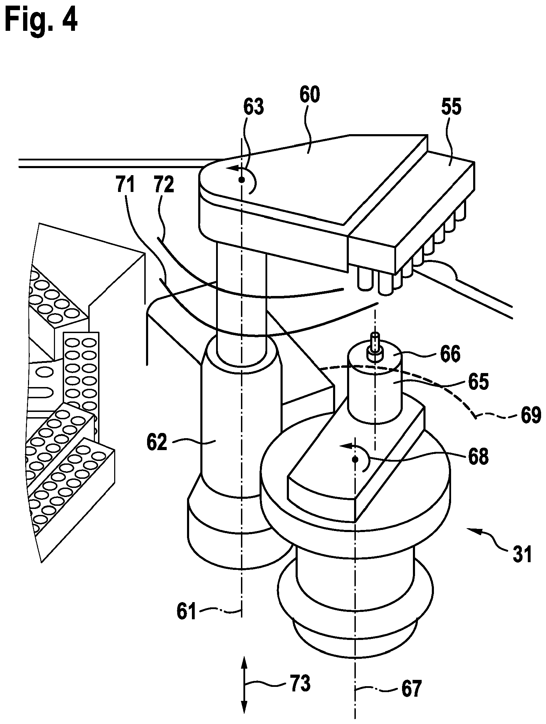

Wie besonders deutlich anhand der Fig. 3 und 4 erkennbar ist, ist der Kapselaufnehmer 55 an einem Ende eines Tragarms 60 befestigt. Der Tragarm 60 ist wiederum in einer ersten Schwenkachse 61 im Bereich einer Säule 62 in Richtung des Doppelpfeils 63 dreh- bzw. schwenkbar angeordnet. Ferner ist anhand der Fig. 3 und 4 erkennbar, dass die Wiegeeinrichtung 31 eine Wiegezelle 65 mit einer einzigen Wiegeaufnahme 66 umfasst. Die Wiegeaufnahme 66 bzw. die Wiegezelle 65 ist somit dazu ausgebildet, eine einzige Kapsel 10 aufzunehmen bzw. deren Gewicht zu ermitteln. Weiterhin ist anhand der Fig. 3 und 4 erkennbar, dass die Wiegezelle 65 in einem Abstand a von einer zweiten Schwenkachse 67 angeordnet ist, wobei die Wiegezelle 65 um die zweite Schwenkachse 67 in Richtung des Doppelpfeils 68 schwenkbar ist.

Bei dem Schwenken der Wiegezelle 65 bzw. der Wiegeaufnahme 66 um die zweite Schwenkachse 67 (wobei die zweite Schwenkachse 67 parallel zur ersten Schwenkachse 61 sowie senkrecht zur horizontalen Förderebene des Förderrads 21 angeordnet ist) bewegt sich die Wiegeaufnahme 66 entlang einer (kreisförmigen) Bewegungsbahn 69 entsprechend des Abstands a von der zweiten Schwenkachse 67. Weiterhin werden die einzelnen Aufnahmen 54 des Kapselaufnehmers 55 der beiden Reihen von Aufnahmen 54 beim Drehen um die erste Schwenkachse 61 entlang von Bewegungsbahnen 71, 72 bewegt, entsprechend des Abstands der Aufnahmen 54 von der ersten Schwenkachse 61. Durch eine entsprechende Kombination der Drehwinkelstellung der Wiegeaufnahme 66 in Bezug auf die zweite Schwenkachse 67 sowie der entsprechenden Aufnahme 54 des Kapselaufnehmers 55 in Bezug zur ersten Schwenkachse 61 lässt sich dabei für jede Aufnahme 54 in dem Kapselaufnehmer 55 eine Position einstellen, bei der die Aufnahme 54 fluchtend oberhalb der Wiegeaufnahme 66 angeordnet ist. Dies ist in der Fig. 4 dargestellt, wobei anhand der Fig. 4 weiterhin erkennbar ist, dass die Säule 62 und somit auch der Kapselaufnehmer 55 in Richtung des Doppelpfeils 73 heb- und senkbar angeordnet ist, um die jeweilige Kapsel 10 auf die Wiegeaufnahme 66 abzulegen bzw. zu positionieren. Bei der Ablage der jeweiligen Kapsel 10 auf die Wiegeaufnahme 66 wird dabei der angesprochene Unterdruck, der die Kapsel 10 in der jeweiligen Aufnahme 54 hält, selektiv abgeschalten.

Nach dem Wiegen der jeweiligen Kapsel 10 wird die entsprechende Aufnahme 54 des Kapselaufnehmers 55 wiederum in Überdeckung mit der Kapsel 10 gebracht, und durch Absenken der Aufnahme 54 und Aktivierung der entsprechenden Unterdruck- bzw. Vakuumquelle ein Ansaugen der Kapsel 10 in der Aufnahme 54 des Kapselaufnehmers 55 ermöglicht. Anschließend werden nach dem Wiegen aller Kapseln 10 des Kapselaufnehmers 55 die Kapseln 10 wiederum in Überdeckung mit einem Kapselhalter 25 am Förderrad 21 gebracht, in dessen Aufnahmen 24 sich keine Kapseln 10 befinden, um die Kapseln 10 an die Aufnahmen 24 des Kapselhalters 25 zu übergeben.

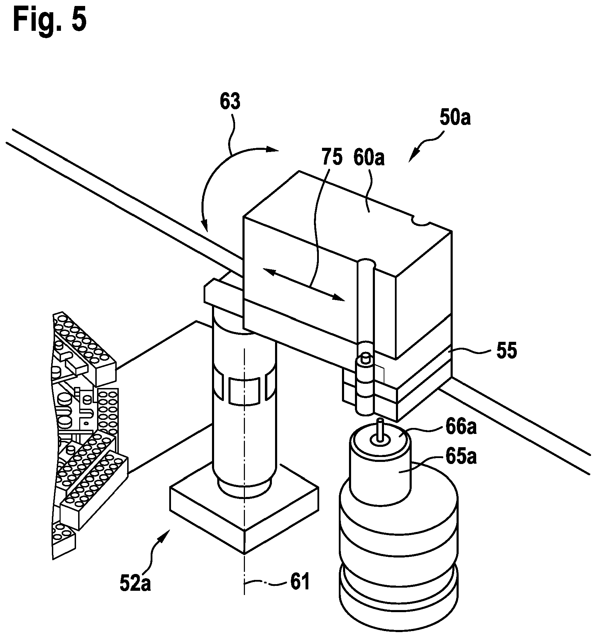

Die in der Fig. 5 dargestellte Einrichtung 50a unterscheidet sich von der Einrichtung 50 dadurch, dass die Wiegezelle 65a bzw. die Wiegeaufnahme 66a ortsfest angeordnet ist. Demgegenüber weist die Überführeinrichtung 52a einen Tragarm 60a auf, der nicht nur um die erste Schwenkachse 61 in Richtung des Doppelpfeils 63 schwenkbar angeordnet ist, sondern auch in Bezug auf die erste Schwenkachse 61 in radialer Richtung linear in Richtung des Doppelpfeils 75. Auch mit einer derartigen Ausgestaltung der Einrichtung 50a lässt sich eine fluchtende Anordnung jeder Aufnahme 54 des Kapselaufnehmers 55 in Bezug zur ortsfest angeordneten Wiegeaufnahme 66a erzielen.

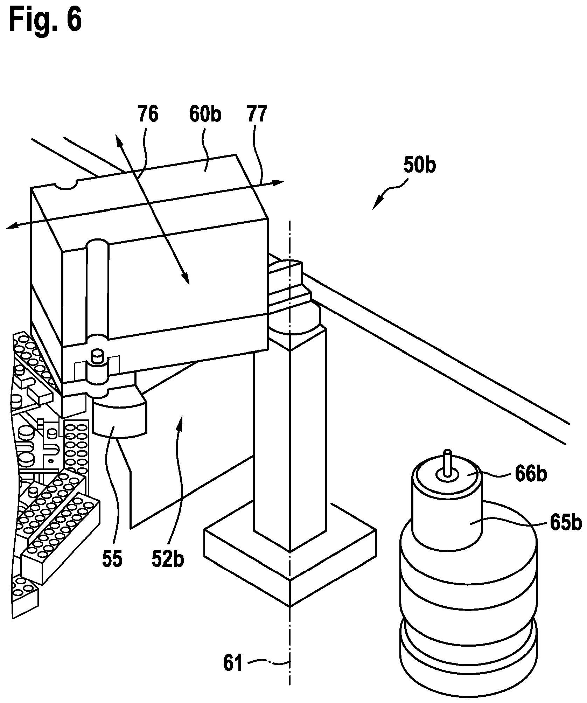

Die in der Fig. 6 dargestellte Einrichtung 50b mit der Überführeinrichtung 52 b weist demgegenüber zusätzlich zu einer optionalen Schwenkbarkeit um die erste Schwenkachse 61 einen Tragarm 60b auf, der in Richtung der beiden senkrecht zueinander angeordneten Achsen 76, 77 in der horizontalen Ebene, d.h. parallel zur Förderebene des Förderrads 21 beweglich angeordnet ist, sodass auch mittels der Einrichtung 50b es möglich ist, die jeweilige Aufnahme 54 des Kapselaufnehmers 55 in Überdeckung mit der ortsfest angeordneten Wiegeaufnahme 66b der Wiegezelle 65b zu bringen.

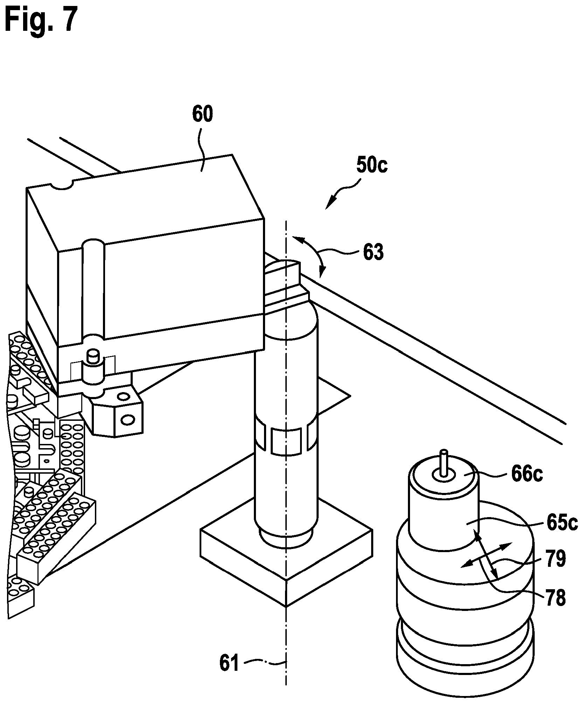

Zuletzt ist in der Fig. 7 der Fall dargestellt, bei der die Einrichtung 50c mit der Überführeinrichtung 52c einen um die erste Schwenkachse 61 schwenkbaren Tragarm 60 entsprechend der Einrichtung 50 aufweist. Demgegenüber ist die Wiegezelle 65c in Richtung der beiden senkrecht zueinander angeordneten Achsen 78, 79 parallel zur Förderebene des Förderrads 21 verstellbar angeordnet, um eine Überdeckung der jeweiligen Aufnahme 54 des Kapselaufnehmers 55 mit der Wiegeaufnahme 66c der Wiegezelle 65c zu ermöglichen.

Die soweit beschriebenen Einrichtungen 50, 50a bis 50c sowie die Vorrichtung 100 können in vielfältiger Art und Weise abgewandelt bzw. modifiziert werden, ohne Z von der Erfindung wie sie in den Ansprüchen definiert ist, abzuweichen. So ist es beispielsweise denkbar, die Kapseln 10 in den Aufnahme 54 nicht durch Unterdruck zu halten, sondern auf mechanische Art und Weise, insbesondere durch Klemmen.

## Patentansprüche

1. Einrichtung (50; 50a bis 50c) zur Ermittlung des Gewichts einer in einer Aufnahme (26) eines Kapselhalters (25) eines schrittweise gedrehten Förderrads (21) angeordneten Kapsel (10), umfassend eine Überführeinrichtung (52; 52a bis 52c) zum Überführen wenigstens einer Kapsel (10) aus dem Kapselhalter (25) in eine mehrere Aufnahmen (54) für jeweils eine Kapsel (10) aufweisenden Kapselaufnehmer (55) und zurück, wobei der Kapselaufnehmer (55) in einer zur Förderebene des Förderrads (21) parallelen Ebene beweglich angeordnet ist,
**dadurch gekennzeichnet,**
**dass** eine Wiegezelle (65; 65a bis 65c) mit einer einzigen Wiegeaufnahme (66; 66a bis 66c) für eine Kapsel (10) vorgesehen ist, und dass jede Aufnahme (54) in dem Kapselaufnehmer (55) mit der zu wiegenden Kapsel (10) und die einzige Wiegeaufnahme (66; 66a bis 66c) der Wiegezelle (65; 65a bis 65c) in Überdeckung zueinander positionierbar sind.

2. Einrichtung nach Anspruch 1,
**dadurch gekennzeichnet,**
**dass** sowohl der Kapselaufnehmer (55) als auch die Wiegeaufnahme (66) der Wiegezelle (65) um jeweils eine Achse (61, 67) schwenkbar gelagert sind, wobei die beiden Achsen (61, 67) parallel zueinander und vorzugsweise senkrecht zur Förderebene des Förderrads (21) angeordnet sind, und wobei Bewegungsbahnen (71, 72) der Aufnahmen (54) in dem Kapselaufnehmer (55) bei einer Drehung des Kapselaufnehmers (55) um die eine Achse (61) und eine Bewegungsbahn (69) der Wiegeaufnahme (66) um die andere Achse (67) in Überdeckung positionierbar sind.

3. Einrichtung nach Anspruch 1,
**dadurch gekennzeichnet,**
**dass** die Wiegeaufnahme (66a) der Wiegezelle (65a) ortsfest angeordnet ist, und dass der Kapselaufnehmer (55) um eine vorzugsweise senkrecht zur Förderebene des Förderrads (21) parallelen Ebene angeordneten Achse (61) schwenkbar und zusätzlich in Richtung wenigstens einer Richtung linear beweglich angeordnet ist.

4. Einrichtung nach Anspruch 3,
**dadurch gekennzeichnet,**
**dass** die Linearbewegung radial zur Achse (61) ausgerichtet ist.

5. Einrichtung nach Anspruch 1,
**dadurch gekennzeichnet,**
**dass** die Wiegeaufnahme (66b) der Wiegezelle (65b) ortsfest angeordnet ist, und dass der Kapselaufnehmer (55) in zwei, senkrecht zueinander angeordneten Achsen (76, 77), die vorzugsweise parallel zur Förderebene des Förderrads (21) verlaufen, linear beweglich angeordnet ist.

6. Einrichtung nach Anspruch 1,
**dadurch gekennzeichnet,**
**dass** der Kapselaufnehmer (55) um eine Achse (61) schwenkbar angeordnet ist, und dass die Wiegeaufnahme (66c) der Wiegezelle (65c) in zwei, senkrecht zueinander angeordneten Achsen (78, 79) linear beweglich angeordnet ist, wobei die Achse (61) des Kapselaufnehmers (55) senkrecht zur Förderebene des Förderrads (21) angeordnet ist und die beiden Achsen (78, 79) der Wiegeaufnahme (66c) parallel zur Förderebene des Förderrads (21) verlaufen.

7. Einrichtung nach einem der Ansprüche 1 bis 6,
**dadurch gekennzeichnet,**
**dass** der Kapselaufnehmer (55) zusätzlich senkrecht zur Förderebene des Förderrads (21) beweglich angeordnet ist.

8. Einrichtung nach einem der Ansprüche 1 bis 7,
**dadurch gekennzeichnet,**
**dass** die Aufnahmen (54) in dem Kapselaufnehmer (55) mit einer Unterdruckeinrichtung gekoppelt sind.

9. Einrichtung nach einem der Ansprüche 1 bis 8,
**dadurch gekennzeichnet,**
**dass** der Kapselhalter (25) als ein mehrere Aufnahme (26) für jeweils eine Kapsel (10) aufweisendes Formatteil ausgebildet ist, das austauschbar an dem Förderrad (21) angeordnet ist.

10. Vorrichtung (100) zum Herstellen von mit einem Füllgut gefüllten Kapseln (10) und wenigstens einer Einrichtung (50; 50a bis 50c), die nach einem der Ansprüche 1 bis 9 ausgebildet ist.

11. Vorrichtung nach Anspruch 10,
**dadurch gekennzeichnet,**
**dass** eine einzige Einrichtung (50; 50a bis 50c) vorgesehen ist, die sowohl das Netto-Gewicht als auch das Brutto-Gewicht der Kapsel (10) erfasst.

## Claims

1. Device (50; 50a to 50c) for determining the weight of a capsule (10) arranged in a receptacle (26) of a capsule holder (25) of an incrementally rotated conveyor wheel (21), comprising a transfer device (52; 52a to 52c) for transferring at least one capsule (10) from the capsule holder (25) into a capsule receiver (55) having a plurality of receptacles (54) for one capsule (10) respectively, and back again, the capsule receiver (55) being movably arranged in a plane parallel to the conveyor plane of the conveyor wheel (21),
**characterized in that**
a weighing cell (65; 65a to 65c) having a single weighing receptacle (66; 66a to 66c) is provided for a capsule (10), and **in that** each receptacle (54) in the capsule receiver (55) having the capsule (10) to be weighed and the single weighing receptacle (66; 66a to 66c) of the weighing cell (65; 65a to 65c) can be positioned in overlap with one another.

2. Device according to claim 1,
**characterized in that**
both the capsule receiver (55) and the weighing receptacle (66) of the weighing cell (65) are mounted so as to each be pivotable about an axis (61, 67), the two axes (61, 67) being parallel to one another and preferably perpendicular to the conveyor plane of the conveyor wheel (21), and it being possible to position movement paths (71, 72) of the receptacles (54) in the capsule receiver (55) when the capsule receiver (55) rotates about one axis (61) and a movement path (69) of the weighing receptacle (66) about the other axis (67) in overlap.

3. Device according to claim 1,
**characterized in that**
the weighing receptacle (66a) of the weighing cell (65a) is stationary, and **in that** the capsule receiver (55) is arranged so as to be pivotable about an axis (61) which is preferably perpendicular to the conveyor plane of the conveyor wheel (21), and also so as to be linearly movable in the direction of at least one direction.

4. Device according to claim 3,
**characterized in that**
the linear movement is oriented radially with respect to the axis (61).

5. Device according to claim 1,
**characterized in that**
the weighing receptacle (66b) of the weighing cell (65b) is stationary, and **in that** the capsule receiver (55) is arranged so to be linearly movable in two axes (76, 77) which are perpendicular to one another and which preferably extend parallel to the conveyor plane of the conveyor wheel (21).

6. Device according to claim 1,
**characterized in that**
the capsule receiver (55) is arranged so to be pivotable about an axis (61), and **in that** the weighing receptacle (66c) of the weighing cell (65c) is arranged so as to be linearly movable in two axes (78, 79) which are perpendicular to one another, the axis (61) of the capsule receiver (55) being perpendicular to the conveyor plane of the conveyor wheel (21) and the two axes (78, 79) of the weighing receptacle (66c) extending parallel to the conveyor plane of the conveyor wheel (21).

7. Device according to any of claims 1 to 6,
**characterized in that**
the capsule receiver (55) is additionally arranged so to be movable perpendicularly to the conveyor plane of the conveyor wheel (21).

8. Device according to any of claims 1 to 7,
**characterized in that**
the receptacles (54) in the capsule receiver (55) are coupled to a negative-pressure device.

9. Device according to any of claims 1 to 8,
**characterized in that**
the capsule holder (25) is designed as a format part which has a plurality of receptacles (26) for one capsule (10) respectively and which is interchangeably arranged on the conveyor wheel (21).

10. Apparatus (100) for producing capsules (10) filled with a filling material and at least one device (50; 50a to 50c), which is designed according to any of claims 1 to 9.

11. Apparatus according to claim 10,
**characterized in that**
a single device (50; 50a to 50c) is provided which detects both the net weight and the gross weight of the capsule (10).

## Revendications

1. Système (50 ; 50a à 50c) pour déterminer le poids d'une capsule (10) disposée dans un logement (26) d'un porte-capsule (25) d'une roue de transport (21) amenée en rotation pas à pas, comprenant un système de transfert (52 ; 52a à 52c) pour le transfert d'au moins une capsule (10) du porte-capsule (25) dans un capteur de capsule (55) présentant plusieurs logements (54) pour respectivement une capsule (10) et inversement, dans lequel le capteur de capsule (55) est disposé de manière mobile dans un plan parallèle au plan de transport de la roue de transport (21),
**caractérisé en ce**
**qu'**une cellule de pesée (65 ; 65a à 65c) est pourvue d'un seul logement de pesée (66 ; 66a à 66c) pour une capsule (10), et que chaque logement (54) dans le capteur de capsule (55) avec la capsule (10) à peser et le seul logement de pesée (66 ; 66a à 66c) de la cellule de pesée (65 ; 65a à 65c) peuvent être positionnés en coïncidence l'un par rapport à l'autre.

2. Système selon la revendication 1,
**caractérisé en ce**
**que** aussi bien le capteur de capsule (55) que le logement de pesée (66) de la cellule de pesée (65) sont montés de manière à pouvoir pivoter autour de respectivement un axe (61, 67), dans lequel les deux axes (61, 67) sont disposés parallèlement l'un à l'autre et de préférence perpendiculairement au plan de transport de la roue de transport (21), et dans lequel des trajectoires de déplacement (71, 72) des logements (54) dans le capteur de capsule (55) lors d'une rotation du capteur de capsule (55) autour d'un axe (61) et une trajectoire de déplacement (69) du logement de pesée (66) autour de l'autre axe (67) peuvent être positionnés en coïncidence.

3. Système selon la revendication 1,
**caractérisé en ce**
**que** le logement de pesée (66a) de la cellule de pesée (65a) est disposé de manière fixe,
et **que** le capteur de capsule (55) est disposé de manière à pouvoir pivoter autour d'un axe (61) disposé de préférence perpendiculairement au plan de transport de la roue de transport (21) et en plus de manière mobile linéairement en direction d'au moins une direction.

4. Système selon la revendication 3,
**caractérisé en ce**
**que** le mouvement linéaire est orienté radialement par rapport à l'axe (61).

5. Système selon la revendication 1,
**caractérisé en ce**
**que** le logement de pesée (66b) de la cellule de pesée (65b) est disposé de manière fixe,
et **que** le capteur de capsule (55) est disposé de manière mobile linéairement dans deux axes (76, 77) disposés perpendiculairement l'un à l'autre, qui s'étendent de préférence parallèlement au plan de transport de la roue de transport (21).

6. Système selon la revendication 1,
**caractérisé en ce**
**que** le capteur de capsule (55) est disposé de manière à pouvoir pivoter autour d'un axe (61), et que le logement de pesée (66c) de la cellule de pesée (65c) est disposé de manière mobile linéairement dans deux axes (78, 79) disposés perpendiculairement l'un à l'autre, dans lequel l'axe (61) du capteur de capsule (55) est disposé perpendiculairement au plan de transport de la roue de transport (21) et les deux axes (78, 79) du logement de pesée (66c) s'étendent parallèlement au plan de transport de la roue de transport (21).

7. Système selon l'une quelconque des revendications 1 à 6,
**caractérisé en ce**
**que** le capteur de capsule (55) est disposé en plus de manière mobile perpendiculairement au plan de transport de la roue de transport (21).

8. Système selon l'une quelconque des revendications 1 à 7,
**caractérisé en ce**
**que** les logements (54) dans le capteur de capsule (55) sont accouplés à un système de vide.

9. Système selon l'une quelconque des revendications 1 à 8,
**caractérisé en ce**
**que** le porte-capsule (25) est réalisé sous la forme d'une pièce de format présentant plusieurs logements (26) pour respectivement une capsule (10), qui est disposée de manière interchangeable sur la roue de transport (21).

10. Dispositif (100) pour fabriquer des capsules (10) remplies d'une matière de remplissage et au moins un système (50 ; 50a à 50c), qui est réalisé selon l'une quelconque des revendications 1 à 9.

11. Dispositif selon la revendication 10, **caractérisé en ce**
**qu'**un seul système (50 ; 50a à 50c) est prévu, qui détecte aussi bien le poids net que le poids brut de la capsule (10).
